# EUROPEAN PATENT SPECIFICATION

(11) **EP 2 841 187 B1**
(45) Date of publication and mention of the grant of the patent: **22.07.2015**
(21) Application number: 13726018.8
(22) Date of filing: 22.04.2013
(51) Int. Cl.: B01D 53/94, B01J 21/00, B01J 23/89, B01J 21/04, B01J 21/10, B01J 35/04, B01J 37/02

(54) **NOX TRAP COMPOSITION**
ZUSAMMENSETZUNG VON NOX-SPEICHERN
COMPOSITION DE PIÉGEAGE DES NOX

(30) Priority: 26.04.2012 US 201213456374
(43) Date of publication of application: 04.03.2015
(73) Proprietor: Johnson Matthey Public Limited Company, London EC4A 4AB (GB)
(72) Inventor: McKENNA, Fiona-Mairead, Reading RG1 3LN (GB)
(74) Representative: Turberville, Simon
(86) International application number: PCT/IB2013/000751
(87) International publication number: WO 2013/160744

(56) References cited:
- EP-A1- 1 666 127
- US-B2- 7 811 536

## Description

### FIELD OF THE INVENTION

The invention relates to a NOₓ trap composition, its use in exhaust systems for internal combustion engines, and a method for treating an exhaust gas from an internal combustion engine.

### BACKGROUND OF THE INVENTION

Internal combustion engines produce exhaust gases containing a variety of pollutants, including hydrocarbons, carbon monoxide, nitrogen oxides ("NOₓ"), sulfur oxides, and particulate matter. Increasingly stringent national and regional legislation has lowered the amount of pollutants that can be emitted from such diesel or gasoline engines. Many different techniques have been applied to exhaust systems to clean the exhaust gas before it passes to atmosphere.

One such technique utilized to clean exhaust gas is the NOₓ trap (or "NOₓ adsorber catalyst"). NOₓ traps are devices that adsorb NOₓ under lean exhaust conditions, release the adsorbed NOₓ under rich conditions, and reduce the released NOₓ to form N₂. A NOₓ trap typically includes a NOₓ adsorbent for the storage of NOₓ and an oxidation/reduction catalyst.

The NOₓ adsorbent component is typically an alkaline earth metal (such as Ba, Ca, Sr, and Mg), an alkali metal (such as K, Na, Li, and Cs), a rare earth metal (such as La, Y, Pr, and Nd), or combinations thereof. These metals are typically found in the form of oxides. The oxidation/reduction catalyst is typically one or more noble metals, preferably platinum, palladium, and/or rhodium. Typically, platinum is included to perform the oxidation function and rhodium is included to perform the reduction function. The oxidation/reduction catalyst and the NOₓ adsorbent are typically loaded on a support material such as an inorganic oxide for use in the exhaust system.

The NOₓ trap performs three functions. First, nitric oxide reacts with oxygen to produce NO₂ in the presence of the oxidation catalyst. Second, the NO₂ is adsorbed by the NOₓ adsorbent in the form of an inorganic nitrate (for example, BaO or BaCO₃ is converted to Ba(NO₃)₂ on the NOₓ adsorbent). Lastly, when the engine runs under rich conditions, the stored inorganic nitrates decompose to form NO or NO₂ which are then reduced to form N₂ by reaction with carbon monoxide, hydrogen and/or hydrocarbons (or via NHₓ or NCO intermediates) in the presence of the reduction catalyst. Typically, the nitrogen oxides are converted to nitrogen, carbon dioxide and water in the presence of heat, carbon monoxide and hydrocarbons in the exhaust stream.

NOₓ traps have been described in the prior art. For instance, U.S. Pat. No. 7,811,536 describes a NOₓ storage catalyst comprising cobalt, barium and a support. The catalyst may contain platinum or may be platinum-free. The support is alumina, silica, titania, zirconia aluminosilicates, and mixtures thereof, with alumina being preferred.

As with any automotive system and process, it is desirable to attain still further improvements in exhaust gas treatment systems. We have discovered a new NOₓ trap composition with improved aging characteristics.

### SUMMARY OF THE INVENTION

The invention is a NOₓ trap composition that comprises a platinum group metal, barium, cobalt, and a magnesia-alumina support. The invention also includes a NOₓ trap comprising the NOₓ trap composition supported on a substrate, and its use in an exhaust system. The NOₓ trap composition is less prone to storage deactivation and exhibits reduced N₂O formation upon aging.

### DETAILED DESCRIPTION OF THE INVENTION

The NOₓ trap composition of the invention comprises a platinum group metal, barium, cobalt, and a magnesia-alumina support. The platinum group metal (PGM) is preferably platinum, palladium, rhodium, or mixtures thereof; most preferably, the PGM is platinum, palladium, or mixtures thereof.

The magnesia-alumina support is preferably a spinel, a magnesia-alumina mixed metal oxide, a hydrotalcite or hydrotalcite-like material, and combinations of two or more thereof. More preferably, the magnesia-alumina support is a spinel.

Preferably, the magnesia-alumina support comprises 5 to 40 weight percent magnesia, more preferably 10 to 30 weight percent. If the magnesia-alumina support is a hydrotalcite, the support is preferably mixed with an alumina such as boehmite to maintain the overall magnesia content to within 5 to 40 weight percent.

The spinel is preferably a magnesium aluminate spinel, preferably having an atomic ratio of Mg to Al ranging from about 0.17 to about 1, more preferably from about 0.25 to about 0.75, and most preferably from about 0.35 to about 0.65. A most preferred embodiment includes MgAl₂O₄.

The magnesia-alumina mixed metal oxide comprises Al₂O₃ and MgO. Portions of the Al₂O₃ and MgO may be chemically reacted or unreacted. The ratio of Mg/Al in the magnesia-alumina mixed metal oxide may preferably vary from about 0.25 to 10, more preferably from about 0.5 to about 2, and most preferably from about 0.75 to about 1.5.

The magnesia-alumina support may also be a hydrotalcite or hydrotalcitelike (HTL) material. The hydrotalcite or HTL may be collapsed, dehydrated and or dehydroxylated. Non-limiting examples and methods for making various types of hydrotalcites or HTLs are described in U.S. Patent Nos. 4,866,019, 4,946,581, 4,952,382 6,028,023; 6,479,421, 6,929,736, and. 7,112,313; which are incorporated by reference herein in their entirety.

Preferably, the magnesia-alumina support is calcined at a temperature greater than 600°C, more preferably greater than 700°C and most preferably greater than 800°C, prior to its inclusion in the NOₓ trap composition. The calcination is typically performed in the presence of an oxygen-containing gas (such as air) for greater than 1 hour. The high-temperature calcination leads to the formation of spinel in the magnesia-alumina support.

The NOₓ trap composition of the present invention may be prepared by any suitable means. Preferably, the platinum group metal, cobalt and barium are loaded onto the magnesia-alumina support by any known means to form the NOₓ trap composition, the manner of addition is not considered to be particularly critical. For example, a PGM compound (such as platinum nitrate), a cobalt compound (such as cobalt nitrate), and a barium compound (such as barium nitrate) may be supported on the magnesia-alumina support by impregnation, adsorption, ion-exchange, incipient wetness, precipitation, or the like.

The order of addition of the PGM, cobalt and barium compounds to the magnesia-alumina support is not considered critical. For example, the platinum, cobalt, and barium compounds may be added to the magnesia-alumina support simultaneously, or may be added sequentially in any order. Preferably, the cobalt and barium compounds are added to the magnesia-alumina support prior to the addition of the PGM compound(s).

The NOₓ trap composition preferably comprises 0.1 to 10 weight percent PGM, more preferably 0.5 to 5 weight percent PGM, and most preferably 1 to 3 weight percent PGM. The NOₓ trap composition preferably comprises 2 to 20 weight percent cobalt, more preferably 5 to 15 weight percent cobalt, and most preferably 7 to 12 weight percent cobalt. The NOₓ trap composition preferably comprises 1 to 10 weight percent barium, more preferably 2 to 8 weight percent barium, and most preferably 3 to 7 weight percent barium. Preferably, the weight ratio of cobalt:barium is greater than 1, more preferably 2 or higher.

The invention also includes a NOₓ trap. The NOₓ trap comprises the NOₓ trap composition supported on a ceramic substrate or a metallic substrate. The ceramic substrate may be made of any suitable refractory material, e.g., alumina, silica, titania, ceria, zirconia, magnesia, zeolites, silicon nitride, silicon carbide, zirconium silicates, magnesium silicates, aluminosilicates and metallo aluminosilicates (such as cordierite and spodumene), or a mixture or mixed oxide of any two or more thereof. Cordierite, a magnesium aluminosilicate, and silicon carbide are particularly preferred.

The metallic substrate may be made of any suitable metal, and in particular heat-resistant metals and metal alloys such as titanium and stainless steel as well as ferritic alloys containing iron, nickel, chromium, and/or aluminum in addition to other trace metals.

The substrate is preferably a flow-through substrate or a filter substrate. Most preferably, the substrate is a flow-through substrate. In particular, the flow-through substrate is a flow-through monolith preferably having a honeycomb structure with many small, parallel thin-walled channels running axially through the substrate and extending throughout the substrate. The channel cross-section of the substrate may be any shape, but is preferably square, sinusoidal, triangular, rectangular, hexagonal, trapezoidal, circular, or oval.

Preferably, the NOₓ trap is prepared by depositing the NOₓ trap composition on the substrate using washcoat procedures. A representative process for preparing the NOₓ trap using a washcoat procedure is set forth below. It will be understood that the process below can be varied according to different embodiments of the invention.

The washcoating is preferably performed by first slurrying finely divided particles of the NOₓ trap composition in an appropriate solvent, preferably water, to form a slurry. The slurry preferably contains between 5 to 70 weight percent solids, more preferably between 10 to 50 weight percent. Preferably, the particles are milled or subject to another comminution process in order to ensure that substantially all of the solid particles have a particle size of less than 20 microns in an average diameter, prior to forming the slurry. Additional components, such as stabilizers or promoters may also be incorporated in the slurry as a mixture of water soluble or water-dispersible compounds or complexes.

The substrate may then be coated one or more times with the slurry such that there will be deposited on the substrate the desired loading of the NOₓ trap composition.

It is also possible to form the NOₓ trap composition on the substrate in order to produce the NOₓ trap. In such a procedure, a slurry of the magnesia-alumina support is washcoated onto the substrate as described above. After the magnesia-alumina support has been deposited on the substrate (and optionally calcined), the platinum group metal, cobalt and barium may then be added to the magnesia-alumina washcoat. The PGM, barium and cobalt may be added by any known means, including impregnation, adsorption, or ion-exchange of a PGM compound (such as platinum nitrate), a barium compound (such as barium nitrate), and a cobalt compound (such as cobalt nitrate). The order of this addition is not considered critical such that the platinum group metal compound, the barium compound, and the cobalt compound may be added simultaneously or sequentially in any order.

Preferably, the entire length of the substrate is coated with the NOₓ trap composition so that a washcoat of the NOₓ trap composition covers the entire surface of the substrate.

After the NOₓ trap composition is deposited onto the substrate, the NOₓ trap is typically dried by heating at an elevated temperature of preferably 80 to 150°C and then calcined by heating at an elevated temperature. Preferably, the calcination occurs at 400 to 600°C for approximately 1 to 8 hours.

The invention also encompasses an exhaust system for internal combustion engines that comprises the NOₓ trap of the invention. Preferably, the exhaust system comprises the NOₓ trap with an oxidation catalyst and/or a particulate filter. These after-treatment devices are well known in the art. Particulate filters are devices that reduce particulates from the exhaust of internal combustion engines. Particulate filters include catalyzed soot filters (CSF) and bare (non-catalyzed) particulate filters. Catalyzed soot filters (for diesel and gasoline applications) include metal and metal oxide components (such as Pt, Pd, Fe, Mn, Cu, and ceria) to oxidize hydrocarbons and carbon monoxide in addition to destroying soot trapped by the filter.

Particularly preferred exhaust systems include the NOₓ trap followed by a CSF, both close-coupled; a close-coupled NOₓ trap with an underfloor CSF; and a close-coupled diesel oxidation catalyst/CSF and an underfloor NOₓ trap.

The invention also encompasses treating an exhaust gas from an internal combustion engine, in particular for treating exhaust gas from a vehicular lean burn internal combustion engine, such as a diesel engine, a lean-burn gasoline engine, or an engine powered by liquid petroleum gas or natural gas. The method comprises contacting the exhaust gas with the NOₓ trap of the invention.

The following examples merely illustrate the invention. Those skilled in the art will recognize many variations that are within the spirit of the invention and scope of the claims.

### EXAMPLE 1: PREPARATION OF CATALYSTS

### Catalyst 1A (Pt-Pd-Ba-Co/magnesia-alumina support):

Cobalt (II) nitrate (4.92 g) and barium acetate (0.93 g) are dissolved in demineralized water (∼15 mL) using gentle heating. This Co-Ba solution is then added stepwise to magnesia-alumina support (10 g), before being dried at 105°C for 2-3 hours, followed by calcination at 500°C for 2 hours to form a Ba-Co/magnesia-alumina. The Ba-Co/magnesia-alumina is contacted with an aqueous solution of platinum and palladium salts (∼ 7 g solution) to add 1.5 wt.% Pt and 0.5 wt.% Pd onto the final catalyst, before being dried at 105°C for 2-3 hours, followed by calcination at 500°C for 2 hours to form Catalyst 1A. Catalyst 1A contains 10 wt.% Co, 5 wt.% Ba, 1.5 wt.% Pt, and 0.5 wt.% Pd.

### Comparative Catalyst 1B (Pt-Pd-Ba/magnesia-alumina support):

Comparative Catalyst 1B is prepared according to the procedure of Catalyst 1A with the exception that cobalt nitrate is not utilized. Comparative Catalyst 1B contains 5 wt.% Ba, 1.5 wt.% Pt, and 0.5 wt.% Pd.

### Comparative Catalyst 1C (Pt-Pd-Ba-Co/alumina support):

Comparative Catalyst 1C is prepared according to the procedure of Comparative Catalyst 1A with the exception that alumina is used in place of the magnesia-alumina support. Comparative Catalyst 1C contains 10 wt.% Co, 5 wt.% Ba, 1.5 wt.% Pt, and 0.5 wt.% Pd.

### EXAMPLE 2: NOₓ STORAGE TESTING PROCEDURES

The catalyst (0.4 g) is stored at 200°C for 5 minutes in an NO-containing gas, then the temperature is increased to 290°C at a ramping rate of 20°C/minute to achieve a bed temperature of 275°C, and the catalyst is maintained at a 275°C bed temperature for 5 minutes. The catalyst is then subjected to a 15 second rich purge in the presence of a rich gas, followed by Temperature Programmed Desorption (TPD) in the presence of a TPD gas until the bed temperature reaches about 500°C in order to measure the NOₓ storage and N₂O selectivity of the fresh catalysts ("fresh cycle").

The catalyst is then thermally aged at 800°C in air for 24 hours, and is subjected to a rich activation for 2 minutes in the presence of the rich gas at a temperature of 500°C.

The procedure is repeated in order to measure the NOₓ storage and N₂O selectivity of the thermally aged catalyst ("aged cycle").

The NO-containing gas comprises 10.5 vol.% O₂, 50 ppm NO, 6 vol.% CO₂, 1500 ppm CO, 100 ppm hydrocarbons and 6.3 vol.% H₂O.

The rich gas comprises 1.5 vol.% O₂, 6 vol.% CO₂, 43,200 ppm CO, 1830 ppm hydrocarbons and 6.3 vol.% H₂O.

The TPD gas comprises 10.5 vol.% O₂, 6 vol.% CO₂, 1500 ppm CO, 100 ppm hydrocarbons and 6.3 vol.% H₂O.

The NOₓ storage results are shown in Table 1.

The N₂O selectivity results are shown in Table 2.

The results show that the catalyst of the invention (Catalyst 1 A) has higher NOₓ storage and good selectivity to N₂O compared to Comparative Catalysts 1 B and 1C. Catalyst 1A also retains good NOₓ storage and N₂O selectivity after the high temperature aging at 800°C, as compared with Comparative Catalysts 1B and 1C which show much lower NOₓ storage and an increase in selectivity to N₂O upon aging.

**TABLE 1: NOₓ Storage Results**

| **Catalyst** | **NOₓ Storage (% of Input NOₓ stored)** | |
|---|---|---|
| | **Fresh** | **Aged** |
| 1A | 77 | 63 |
| 1B * | 62 | 32 |
| 1C * | 64 | 29 |

| | | |
|---|---|---|
| * Comparison Example | | |

**TABLE 2: Lean N₂O Selectivity Results**

| **Catalyst** | **N₂O Produced (ppm)** | |
|---|---|---|
| | **Fresh** | **Aged** |
| 1A | 21 | 20 |
| 1B * | 21 | 26 |
| 1C* | 18 | 21 |

| | | |
|---|---|---|
| * Comparison Example | | |

## Claims

1. A NOₓ trap composition comprising a platinum group metal, barium, cobalt, and a magnesia-alumina support.

2. The NOₓ trap composition of claim **1** wherein the platinum group metal is selected from the group consisting of platinum, palladium, rhodium, and mixtures thereof.

3. The NOₓ trap composition of claim **1** or claim **2** wherein the magnesia-alumina support is a magnesium aluminate spinel.

4. The NOₓ trap composition of any one of the preceding claims wherein the magnesia-alumina support comprises 5 to 40 weight percent magnesia.

5. The NOₓ trap composition of any one of the preceding claims wherein the NOₓ trap composition comprises 0.1 to 10 weight percent platinum group metal.

6. The NOₓ trap composition of any one of the preceding claims wherein the NOₓ trap composition comprises 2 to 20 weight percent cobalt.

7. The NOₓ trap composition of any one of the preceding claims wherein the NOₓ trap composition comprises 1 to 10 weight percent barium.

8. The NOₓ trap composition of any one of the preceding claims wherein the magnesia-alumina support is pre-calcined at a temperature greater than 600°C.

9. A NOₓ trap comprising the NOₓ trap composition of any one of claims **1** to **8** supported on a metal or ceramic substrate.

10. The NOₓ trap of claim **9** wherein the substrate is a flow-through monolith.

11. An exhaust system for internal combustion engines comprising the NOₓ trap of claim **9** or claim **10.**

12. The exhaust system of claim **11** further comprising an oxidation catalyst, a particulate filter, or combinations thereof.

13. A method for treating an exhaust gas from an internal combustion engine comprising contacting the exhaust gas with the NOₓ trap of claim **9** or claim **10.**

## Patentansprüche

1. NOₓ-Speicherzusammensetzung umfassend ein Platingruppenmetall, Barium, Cobalt und einen Magnesiumoxid-Aluminiumoxid-Träger.

2. NOₓ-Speicherzusammensetzung nach Anspruch 1, wobei das Platingruppenmetall aus der Gruppe bestehend aus Platin, Palladium, Rhodium und Mischungen davon ausgewählt ist.

3. NOₓ-Speicherzusammensetzung nach Anspruch 1 oder Anspruch 2, wobei der Magnesiumoxid-Aluminiumoxid-Träger ein Magnesiumaluminat-Spinell ist.

4. NOₓ-Speicherzusammensetzung nach irgendeinem der vorangehenden Ansprüche, wobei der Magnesiumoxid-Aluminiumoxid-Träger zu 5 bis 40 Gewichtsprozent Magnesiumoxid umfasst.

5. NOₓ-Speicherzusammensetzung nach irgendeinem der vorangehenden Ansprüche, wobei die NOₓ-Speicherzusammensetzung zu 0,1 bis 10 Gewichtsprozent ein Platinumgruppenmetall umfasst.

6. NOₓ-Speicherzusammensetzung nach irgendeinem der vorangehenden Ansprüche, wobei die NOₓ-Speicherzusammensetzung zu 2 bis 20 Gewichtsprozent Cobalt umfasst.

7. NOₓ-Speicherzusammensetzung nach irgendeinem der vorangehenden Ansprüche, wobei die NOₓ-Speicherzusammensetzung zu 1 bis 10 Gewichtsprozent Barium umfasst.

8. NOₓ-Speicherzusammensetzung nach irgendeinem der vorangehenden Ansprüche, wobei der Magnesiumoxid-Aluminiumoxid-Träger bei einer Temperatur über 600 °C vorcalciniert ist.

9. NOₓ-Speicher umfassend die auf einem Metall- oder Keramiksubstrat getragene NOₓ-Speicherzusammensetzung nach irgendeinem der Ansprüche 1 bis 8.

10. NOₓ-Speicher nach Anspruch 9, wobei das Substrat ein Durchflussmonolith ist.

11. Abgassystem für Brennkraftmaschinen, umfassend den NOₓ-Speicher nach Anspruch 9 oder Anspruch 10.

12. Abgassystem nach Anspruch 11, ferner umfassend einen Oxidationskatalysator, einen Partikelfilter oder Kombinationen davon.

13. Verfahren zur Behandlung eines Abgases aus einer Brennkraftmaschine, umfassend das Inkontaktbringen des Abgases mit dem NOₓ-Speicher nach Anspruch 9 oder Anspruch 10.

## Revendications

1. Composition de piégeage de NOₓ comprenant un métal du groupe du platine, du baryum, du cobalt et un support de magnésie-alumine

2. Composition de piégeage de NOₓ selon la revendication 1, le métal du groupe du platine étant choisi dans le groupe constitué par le platine, le palladium, le rhodium et leurs mélanges.

3. Composition de piégeage de NOₓ selon la revendication 1 ou 2, le support de magnésie-alumine étant un spinelle d'aluminate de magnésium.

4. Composition de piégeage de NOₓ selon l'une quelconque des revendications précédentes, le support de magnésie-alumine comprenant 5 à 40% en poids de magnésie.

5. Composition de piégeage de NOₓ selon l'une quelconque des revendications précédentes, la composition de piégeage de NOₓ comprenant 0,1 à 10% en poids de métal du groupe du platine.

6. Composition de piégeage de NOₓ selon l'une quelconque des revendications précédentes, la composition de piégeage de NOₓ comprenant 2 à 20% en poids de cobalt.

7. Composition de piégeage de NOₓ selon l'une quelconque des revendications précédentes, la composition de piégeage de NOₓ comprenant 1 à 10% en poids de baryum.

8. Composition de piégeage de NOₓ selon l'une quelconque des revendications précédentes, le support de magnésie-alumine étant précalciné à une température supérieure à 600°C.

9. Piège de NOₓ, comprenant la composition de piégeage de NOₓ selon l'une quelconque des revendications 1 à 8 supportée sur un substrat en métal ou en céramique.

10. Piège de NOₓ selon la revendication 9, le substrat étant un monolithe à flux continu.

11. Système d'échappement pour moteurs à combustion interne comprenant le piège de NOₓ selon la revendication 9 ou 10.

12. Système d'échappement selon la revendication 11, comprenant en outre un catalyseur d'oxydation, un filtre à particules ou des combinaisons correspondantes.

13. Procédé pour traiter un gaz d'échappement provenant d'un moteur à combustion interne comprenant la mise en contact du gaz d'échappement avec le piège de NOₓ selon la revendication 9 ou 10.
